# EUROPÄISCHE PATENTSCHRIFT

(11) **EP 1 618 023 B1**
(45) Veröffentlichungstag und Bekanntmachung des Hinweises auf die Patenterteilung: **18.04.2007**
(21) Anmeldenummer: 04711562.1
(22) Anmeldetag: 17.02.2004
(51) Int. Cl.: B60R 21/01

(54) **VORRICHTUNG ZUR ANSTEUERUNG VON RÜCKHALTEMITTELN**
DEVICE FOR TRIGGERING RESTRAINT MEANS
DISPOSITIF POUR DECLENCHER DES MOYENS DE RETENUE

(30) Priorität: 17.04.2003 DE 10317640
(43) Veröffentlichungstag der Anmeldung: 25.01.2006
(73) Patentinhaber: ROBERT BOSCH GMBH, 70442 Stuttgart (DE)
(72) Erfinder: LOECKLE, Gerhard, 71634 Ludwigsburg (DE); MARCHTHALER, Reiner, 73333 Gingen (DE)
(86) Internationale Anmeldenummer: PCT/DE2004/000286
(87) Internationale Veröffentlichungsnummer: WO 2004/094195

(56) Entgegenhaltungen:
- EP-A- 0 747 272
- DE-A- 10 128 141
- DE-A- 19 811 865
- US-A1- 2002 014 767

## Beschreibung

### Stand der Technik

Die Erfindung geht aus von einer Vorrichtung zur Ansteuerung von Rückhaltemitteln nach der Gattung des unabhängigen Patentanspruchs.

Aus DE 100 61 040 A1 ist es bekannt, Rückhaltemittel in Abhängigkeit von Signalen einer Fahrdynamikregelung, wie es ESP (Elektronisches Stabilitätsprogramm) ist, anzusteuern. Dabei erfolgt die Auslösung eines reversiblen Gurtstraffers direkt in Abhängigkeit von der Erkenntnis einer sicherheitskritischen Situation, die durch das ESP erkannt wird.

Aus gattungsbildenden DE 198 11 865 A1 ist es bekannt, eine Insassenschutzeinrichtung in ihren Aktivzustand in Abhängigkeit von einem Signal eines Fahrdynamik-Sicherheitssystems zu versetzen. Eine Aktivierung des Fahrdynamik-Sicherheitssystems deutet nämlich auf eine erhöhte Aufprallgefahrensituation hin, so dass es zweckmäßig ist, bei Aktivierung des Fahrdynamik-Sicherheitssystems die Insassenschutzeinrichtung aus ihrem Bereitschaftszustand, in dem lediglich routinemäßig die Eigendiagnose erfolgt, in den Aktivzustand zu versetzen, in dem die Algorithmen zur möglichst gezielten Auslösung, beispielsweise von Airbags, aktiviert werden.

### Vorteile der Erfindung

Die erfindungsgemäße Vorrichtung zur Ansteuerung von Rückhaltemitteln mit den Merkmalen des unabhängigen Patentanspruchs hat demgegenüber den Vorteil, dass nunmehr in Abhängigkeit von einem Signal der Fahrdynamikregelung der wenigstens eine Schwellwert für ein zweites Signal eines Unfallsensors verändert wird. D. h., die Fahrdynamikregelung sorgt für die Beeinflussung der Empfindlichkeit des Auslösealgorithmus für die Rückhaltemittel wie Airbag oder Gurtstraffer. Bei den Unfallsensoren handelt es sich um Precrash-Sensoren, die als Aufprallsensoren geeignet sind.

Durch die in den abhängigen Ansprüchen aufgeführten Maßnahmen und Weiterbildungen sind vorteilhafte Verbesserungen der im unabhängigen Patentanspruch angegebenen Vorrichtung zur Ansteuerung von RücldialtemitteIn möglich.

Besonders vorteilhaft ist, dass das Signal von der Fahrdynamikregelung eine kritische Situation anzeigt. Dies kann beispielsweise bei detektierten Dreh- oder Schleuderbewegungen des Fahrzeugs der Fall sein. Auch der Reibwert zwischen den Fahrzeugreifen und der Fahrbahn kann zur Bestimmung der sicherheitskritischen Situation über die Fahrdynamikregelung verwendet werden, um beispielsweise einen sehr glatten Boden zu delektieren. Das erste Signal kann demnach als ein Gefahrenmaß ausgebildet sein, das je nach seiner Größe dann bestimmt, wie der Schwellwert zu variieren ist, um der möglichen sicherheitskritischen Situation im Auslösealgorithmus Rechnung zu tragen.

### Zeichnung

Ausführungsbeispiele der Erfindung sind in der Zeichnung dargestellt und werden in der nachfolgenden Beschreibung näher erläutert.

Es zeigen Figur 1 ein Blockschaltbild der erfindungsgemäßen Vorrichtung, Figur 2 ein Flussdiagramm und Figur 3 ein Geschwindigkeits-Zeit-Diagramm.

### Beschreibung

Die Ansprechschwellen heutiger Rückhaltesysteme, also die Bedingung, wann ein Airbag, ein Gurtstraffer oder andere Rückhaltemittel gezündet werden und wann nicht, wird durch eine Vielzahl von Crash- und Fehlauslösetests bestimmt. Ein anderer Begriff für die Fehlauslöser ist der Begriff "misuse". Die Misuse-Tests, wie z. B. Fahrten über Bordsteine oder Schlechtwegstrecken, dienen zur Festlegung der Fälle, wann die Rückhaltemittel nicht ausgelöst werden sollen. Die Crash-Tests legen die Fälle fest, wann ein Rückhaltemittel aktiviert werden soll. Da sich die beiden Testklassen aufgrund der heute dem Rückhaltemittel zur Verfügung stehenden Signale nicht immer eindeutig unterscheiden lassen, muss oft ein Kompromiss bei der Anpassung der Auslöseschwellen des Rückhaltemittels eingegangen werden, was dazu führen kann, dass die Rückhaltemittel entweder während eines Unfalles nicht aktiviert werden oder zu einem Zeitpunkt aktiviert werden, an dem sie nicht benötigt werden. Üblicherweise werden die Schwellen mit einem integrierten Beschleunigungssignal, also einem Geschwindigkeitssignal, hier auch als dv-Signal bezeichnet, verglichen. Es sind jedoch andere von der Beschleunigung abgeleitete kinematische Größen verwendbar wie die Vorverlagerung und die Beschleunigung selbst oder auch Signale anderer Sensoren wie von einem Drucksensor oder von einem Frecrash-Sensor.

Erfindungsgemäß wird nun ein Signal von einer Fahrdynamikregelung dazu verwendet, diese Schwellwerte, mit denen das Signal eines Unfallsensors wie z. B. eines Beschleunigungssensors verglichen wird, zu verändern. Damit wird erreicht, dass die Rückhaltemittel in Bezug auf ihre Auslösezeit besser und zielgenauer aktiviert werden. Das Rückhaltesystem kann damit eine höhere Robustheit aufweisen, aber auch in kritischen Situationen empfindlicher reagieren. Brems- und Schleudervorgänge gehören zu den Ereignissen, die durch eine Fahrdynamikregelung als kritische Situation erkannt werden und dann zu einem entsprechenden Gefahrenmaß führen, das den Schwellwert dann beeinflusst. Darüber hinaus kann auch der geschätzte Reibwert zwischen Fahrzeug und Straße zur Anpassung der Schwellwerte herangezogen werden. Diese Größe lässt sich aus den im ESP-Steuergerät vorhandenen Informationen berechnen, beispielsweise aus der Kenntnis, bei welcher Verzögerung die Räder des Fahrzeugs blockieren oder bei welcher Gierrate und Querbeschleunigung das Fahrzeug ausbricht. So kann beispielsweise schon vor dem Entstehen einer kritischen Fahrsituation das Rückhaltemittel empfindlicher eingestellt werden.

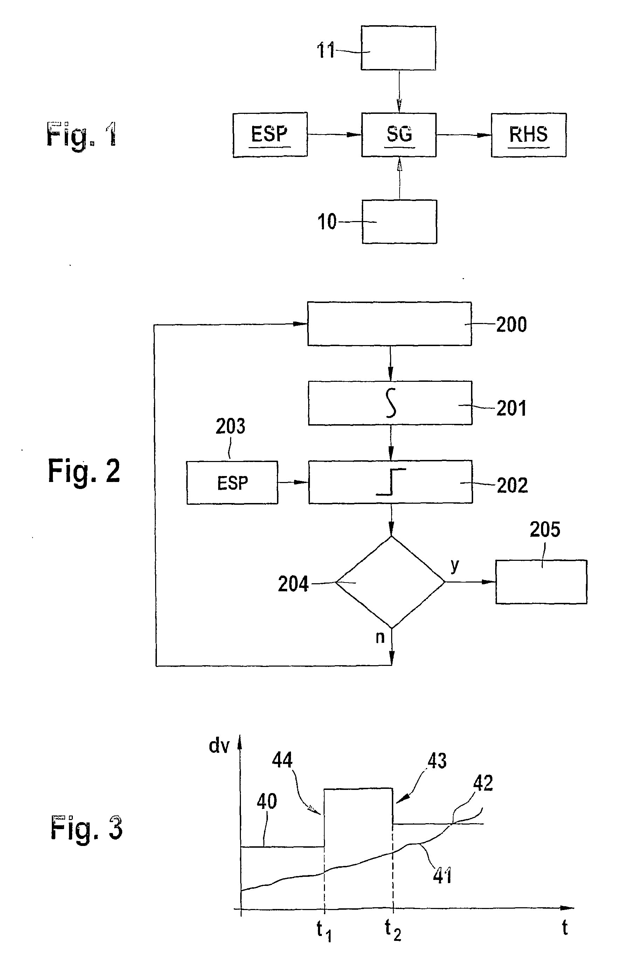

Figur 1 zeigt in einem Blockschaltbild die erfindungsgemäße Vorrichtung. Eine Fahrdynamikregelung ESP ist als Steuergerät an einen ersten Dateneingang eines Steuergeräts SG für ein Rückhaltesystem angeschlossen. An einen zweiten Dateneingang des Steuergeräts SG ist eine externe Unfallsensorik 10 angeschlossen. Diese externe Unfallsensorik beinhaltet ausgelagerte Beschleunigungssensoren, die beispielsweise als Upfront-Sensoren am Kühler angebracht sein können oder als Seitenaufprallsensoren in den Seitenteilen wie der B-Säule des Fahrzeugs. Über einen dritten Dateneingang ist das Steuergerät SG mit einer Precrash-Sensorik 11 verbunden. Diese Precrash-Sensorik 11, die als Unfallsensorik ausgebildet ist, beinhaltet Radarsensoren, Ultraschallsensoren und/oder Videosensoren. Auch damit können kritische Situationen erkannt werden, die beispielsweise zum Auslösen von reversiblen Rückhaltemitteln genutzt werden. Auch die Signale der Precrash-Sensorik 11 können Einfluss auf die Schwellwerte für den Vergleich mit dem Signal des Unfallsensors nehmen. Auch das Steuergerät SG kann eine eigene Unfallsensorik aufweisen, um die Signale der externen Unfallsensorik 10 zu plausibilisieren oder aber selbst einen Unfall zu erkennen. Dabei können beispielsweise Beschleunigungssensoren vorhanden sein, die dazu geeignet sind, Beschleunigungen in Fahrzeuglängs- und/oder Fahrzeugquerrichtung zu erfassen. Auch Drehratensensoren können hier verwendet werden, um Überrollvorgänge oder Schteuderbewegungen zu erkennen. Das Steuergerät SG hat zur Auswertung dieser Sensorsignale einen Prozessor, auf dem der Auslösealgorithmus ausgerechnet wird. Redundante Bauteile sind vorhanden, um die Bestimmung des Auslösealgorithmus zu überprüfen. Der Prozessor bestimmt in seinem Auslösealgorithmus einen Schwellwert für das Signal des Unfallsensors. Dabei wird zunächst das Beschleunigungssignal integriert, um dann als Geschwindigkeitsabbausignal mit einem Schwellwert bestimmt zu werden. Der Schwellwert ist entweder fest eingestellt oder er wird in Abhängigkeit von dem Geschwindigkeitsabbausignal selbst verändert. Auch das Beschleunigungssignal kann zur Veränderung des Schwellwerts verwendet werden. Erfindungsgemäß wird nun zusätzlich das Signal von der Fahrdynamikregelung ESP zur Beeinflussung dieses Schwellwerts verwendet. In fahrzeugkritischen Situationen wird der Schwellwert entsprechend gesenkt, um den Auslösealgorithmus empfindlicher einzustellen. Übertrifft das integrierte Beschleunigungssignal den so veränderten Schwellwert zu einem Zeitpunkt, dann kann es zu einer Auslösung der Rückhaltemittel RHS kommen, die über einen Datenausgang des Steuergeräts SG angesteuert werden können. Zu den Rückhaltemitteln RHS gehören Airbag, Gurtstraffer und/oder ein Überrollbügel.

Figur 2 visualisiert in einem Flussdiagramm den Ablauf des Auslösealgorithmus. In Verfahrensschritt 200 wird durch die Unfallsensorik 10 oder die interne Sensorik im Steuergerät SG die Beschleunigung bei einem Unfall oder einem anderen Ereignis bestimmt. In Verfahrensschritt 201 wird diese Beschleunigung integriert, um den Geschwindigkeitsabbau zu erhalten. In Verfahrensschritt 202 wird das Geschwindigkeitsabbausignal in Abhängigkeit von der Zeit mit einem Schwellwert verglichen. Dieser Schwellwert wird hier auf der Beschleunigung bestimmt und aber auch in Abhängigkeit von einem Signal der Fahrdynamikregelung ESP, das in Verfahrensschritt 203 erzeugt wurde, beeinflusst. Das Steuergerät ESP bestimmt eine Gefahrensituation, die durch ein Gefahrenmaß quantitativ ausgedrückt wird. Bei bestimmten Situationen wie Schleudern oder Drehbewegungen wird der Schwellwert unterschiedlich beeinflusst. Zusätzlich kann hier der Reibwert zwischen Fahrzeugreifen und Straße zur Beeinflussung des Schwellwerts benutzt werden. In Verfahrensschritt 204 wird dann ausgewertet, ob der Schwellwert in Verfahrensschritt 202 durch das integrierte Beschleunigungssignal übertroffen wurde. Ist das nicht der Fall, wird zu Verfahrensschritt 200 zurückgesprungen. Ist es jedoch der Fall, dann wird zu Verfahrensschritt 205 gesprungen, um die entsprechenden Rückhaltemittel RHS auszulösen. Die Auslösung der Rückhaltemittel erfolgt dann noch gegebenenfalls in Abhängigkeit von einer Innenraumsensierung.

Figur 3 zeigt nun in einem Geschwindigkeitsabbau-Zeit-Diagramm den Einfluss der Fahrdynamikregelung auf den Schwellwert für das Signal des Unfallsensors. Auf der Abszisse ist die Zeit aufgetragen, während auf der Ordinate das Geschwindigkeitsabbausignal dv aufgetragen ist. Das Geschwindigkeitsabbausignal ist im Diagramm durch die Kurve 41 repräsentiert. Der dazugehörige Schwellwert ist durch die Kurve 40 repräsentiert. Die Kurve 40 verläuft bis zum Zeitpunkt t1 mit der Steigung 0, um dann einen positiven Sprung um den Betrag 44 zu machen, der in Abhängigkeit vom Beschleunigungssignal entstanden ist, sodass hier eine Unempfindlichkeitsschaltung des Schwellwerts 40 erfolgt. Zum Zeitpunkt t2 wird der Schwellwert um den Betrag 43 gesenkt. Er wird also empfindlicher geschaltet, wobei der Betrag 43 in Abhängigkeit von einem Gefahrenmaß der Fahrdynamikregelung ESP erfolgt ist. Die Veränderungen des Schwellwerts 40 können auch durch eine Mischung aus Beschleunigungssignal und Signal von der ESP verändert werden. Zum Zeitpunkt 42 erreicht dann das Geschwindigkeitsabbausignal 41 den Schwellwert, sodass es hier zu einer Auslösung von Rückhaltemitteln kommen kann.

## Patentansprüche

1. Vorrichtung zur Ansteuerung von Rückhaltemitteln (RHS), wobei die Vorrichtung derart mit einer Fahrdynamik-Regelung (203) verbindbar ist, dass die Vorrichtung die Rückhaltemittel (RHS) in Abhängigkeit von einem ersten Signal der Fahrdynamik-Regelung (203) ansteuert, wobei die Vorrichtung derart mit einem Unfallsensor (10) verbindbar ist, dass die Vorrichtung die Rückhaltemittel (RHS) in Abhängigkeit von wenigstens einem Schwellwertvergleich eines zweiten Signals des wenigstens einen Unfallsensors (10) ansteuert, wobei der wenigstens eine Schwellwert in Abhängigkeit von dem ersten Signal eingestellt wird, **dadurch gekennzeichnet, dass** der Unfallsensor ein Precrash-Sensor (11) ist, der einen Radarsensor, Ultraschallsensor und/oder Videosensor beinhaltet.

2. Vorrichtung nach Anspruch 1, **dadurch gekennzeichnet, dass** das erste Signal ein Reibwert ist.

3. Vorrichtung nach Anspruch 1, **dadurch gekennzeichnet, dass** das erste Signal ein Gefahrenmaß ist.

## Claims

1. Device for triggering restraint means (RHS), the device being capable of being connected to a movement dynamics controller (203) in such a way that the device triggers the restraint means (RHS) as a function of a first signal of the movement dynamics controller (203), the device being capable of being connected to an accident sensor (10) in such a way that the device triggers the restraint means (RHS) as a function of at least one threshold value comparison of a second signal of the at least one accident sensor (10), the at least one threshold value being set as a function of the first signal, **characterized in that** the accident sensor is a precrash sensor (11) which includes a radar sensor, ultrasonic sensor and/or video sensor.

2. Device according to Claim 1, **characterized in that** the first signal is a friction value.

3. Device according to Claim 1, **characterized in that** the first signal is a degree of hazard.

## Revendications

1. Dispositif de commande de moyens de retenue (RHS), le dispositif pouvant être relié à une régulation de la dynamique de roulage (203) pour commander les moyens de retenue (RHS) en fonction d'un premier signal de la régulation de la dynamique de roulage (203), le dispositif pouvant être relié à un capteur d'accident (10) pour commander les moyens de retenue (RHS) en fonction d'au moins une comparaison d'un deuxième signal du capteur d'accident (10), avec une valeur de seuil réglée en fonction du premier signal,
**caractérisé en ce que**
le capteur d'accident est un capteur de pré-collision (11) qui comprend un capteur radar, un capteur à ultrasons et/ou un capteur vidéo.

2. Dispositif selon la revendication 1,
**caractérisé en ce que**
le premier signal est un coefficient de frottement.

3. Dispositif selon la revendication 1,
**caractérisé en ce que**
le premier signal est une estimation de danger.
